# EUROPEAN PATENT APPLICATION

(11) **EP 4 807 634 A1**
(43) Date of publication of application: **16.09.2026**
(21) Application number: 26154538.8
(22) Date of filing: 27.01.2026
(51) Int. Cl.: G06N 10/40

(54) **QUANTUM COMPUTER AND METHOD FOR CONTROLLING QUANTUM COMPUTER**

(30) Priority: 27.02.2025 JP 2025030036
(71) Applicant: Hitachi, Ltd., Tokyo 100-8280 (JP)
(72) Inventor: NAGAI, Ryo, Tokyo, 100-8280 (JP); TAKEMOTO, Takashi, Tokyo, 100-8280 (JP); WACHI, Yusuke, Tokyo, 100-8280 (JP)
(74) Representative: Mewburn Ellis LLP

(57) **Abstract**

There is provided an implementation technique that enables shuttling by reducing the circuit size in a quantum computer. One aspect of the present invention for solving the above problem is a quantum computer including: a quantum dot device having a plurality of gate electrodes; a basic signal generation source configured to generate a voltage to be applied to each of the plurality of gate electrodes; a rectangular wave generation unit configured to shape the voltage to be applied to each of the plurality of gate electrodes to have a rectangular waveform; and a filter function unit arranged between the rectangular wave generation unit and the plurality of gate electrodes to smooth the rectangular waveform.

## Description

### BACKGROUND OF THE INVENTION

### 1. Field of the Invention

The present invention relates to a quantum computer, and more particularly to a shuttling technique in a silicon quantum computer.

### 2. Description of the Related Art

In a silicon quantum computer, in order to implement fault-tolerant quantum computation by performing calculations among a plurality of qubits while satisfying control conditions and spatial constraints associated with the arrangement of gate electrodes, a technique (shuttling) for transporting electrons within a silicon semiconductor substrate used as qubits is required. In particular, it is known that if electrons can be shuttled at a constant speed, quantum information loss associated with the shuttling can be prevented, which functions beneficially in large-scale quantum computation.

A silicon quantum computer using shuttling is disclosed in, for example, WO2024/180760. In addition, a technique for stably shuttling electrons has been reported in, for example, "Blueprint of a Scalable Spin Qubit Shuttle Device for Coherent Mid-Range Qubit Transfer in Disordered Si/SiGe/SiO2" Langrock, et al. PRX Quantum 4, 020305 (2023).

### SUMMARY OF THE INVENTION

The technique described in WO2024/180760 relates to path selection in electron shuttling, but does not take into consideration stable shuttling. In the technique described in "Blueprint of a Scalable Spin Qubit Shuttle Device for Coherent Mid-Range Qubit Transfer in Disordered Si/SiGe/SiO2" Langrock, et al. PRX Quantum 4, 020305 (2023), shuttling is implemented by applying a voltage having a modulated sine wave as a waveform to a plurality of gate electrodes arranged in the shuttling direction. However, this implementation method is analog control and accordingly, is not suitable for large-scale implementation.

It is an object of the present invention to provide a technique that enables stable shuttling to be performed while reducing the circuit size in a quantum computer.

One aspect of the present invention for solving the above problem is a quantum computer including: a quantum dot device having a plurality of gate electrodes; a basic signal generation source configured to generate a voltage to be applied to each of the plurality of gate electrodes; a rectangular wave generation unit configured to shape the voltage to be applied to each of the plurality of gate electrodes to have a rectangular waveform; and a filter function unit arranged between the rectangular wave generation unit and the plurality of gate electrodes to smooth the rectangular waveform.

Another aspect of the present invention for solving the above problem is a method for controlling a quantum computer, the method including: a step of generating a voltage to be applied to each of a plurality of gate electrodes of a quantum dot device; a step of shaping the voltage to be applied to each of the plurality of gate electrodes to have a rectangular waveform; a step of smoothing the rectangular waveform; and a step of shuttling electrons by applying a voltage with the smoothed rectangular waveform to the plurality of gate electrodes.

Still another aspect of the present invention for solving the above problem is a quantum computer including: a quantum dot device having a plurality of gate electrodes; at least three DC voltage sources each having a different voltage value that generate voltages to be applied to the plurality of gate electrodes; a plurality of switches for switching the connections between the at least three DC voltage sources and the plurality of gate electrodes; a switch control unit that controls the plurality of switches; and a low pass filter arranged between the plurality of switches and the plurality of gate electrodes.

Still another aspect of the present invention for solving the above problem is a quantum computer including: a quantum dot device having a plurality of gate electrodes; a generation circuit that generates square waves to be applied to the plurality of gate electrodes; a line for branching the generated square waves; a first adjustment circuit that adjusts the duty ratio and amplitude of one of the branched square waves; a second adjustment circuit that adjusts the duty ratio and amplitude of the other of the branched square waves; a delay circuit that delays the output of the second adjustment circuit; a waveform addition circuit that combines the output of the first adjustment circuit and the output of the delay circuit; and a low pass filter arranged between the waveform addition circuit and the gate electrodes.

Still another aspect of the present invention for solving the above problem is a quantum computer including a quantum dot device having a plurality of gate electrodes, wherein electron shuttling is performed by adjusting a voltage to be applied to each of the plurality of gate electrodes based on a voltage waveform generated by digital control.

Still another aspect of the present invention for solving the above problem is a quantum computer including: a quantum dot device having a plurality of gate electrodes; a rectangular wave generation unit configured to generate a voltage having a rectangular waveform; and a low pass filter arranged between the rectangular wave generation unit and the plurality of gate electrodes, wherein the voltage is applied to the plurality of gate electrodes through the low pass filter.

It is possible to provide a technique that enables stable shuttling to be performed while reducing the circuit size in a quantum computer.

### BRIEF DESCRIPTION OF THE DRAWINGS

Fig. 1 is a schematic diagram of a silicon quantum device in which shuttling is implemented;
Fig. 2 is a block diagram illustrating the configuration of a quantum computer according to a first embodiment;
Fig. 3 is a waveform diagram illustrating a rectangular wave generated by a rectangular wave generation unit according to the first embodiment;
Fig. 4 is a waveform diagram illustrating the shape of a rectangular wave applied to each gate electrode according to the first embodiment;
Fig. 5A is a waveform diagram showing a voltage waveform of a comparative example in the first embodiment;
Fig. 5B is a waveform diagram showing a voltage waveform according to the first embodiment;
Fig. 6A is a graph diagram showing the simulation results of evaluating electron orbits and quantum dot sizes for a comparative example according to the first embodiment;
Fig. 6B is a graph diagram showing the simulation results of evaluating the electron orbits and quantum dot sizes according to the first embodiment;
Fig. 7 is a block diagram showing an example of the arrangement of functional components shown in Fig. 2 in the quantum computer according to the first embodiment;
Fig. 8 is a block diagram showing another example of the arrangement of the functional components shown in Fig. 2 in the quantum computer according to the first embodiment;
Fig. 9 is a block diagram showing a specific device having the functions in Fig. 2 and a circuit structure in a quantum computer according to a second embodiment;
Fig. 10 is a block diagram showing a specific device having the functions in Fig. 2 and a circuit structure in a quantum computer according to a second embodiment;
Fig. 11 is a block diagram showing another specific device having functions in Fig. 2 and a circuit structure in a quantum computer according to a third embodiment; and
Fig. 12 is a waveform diagram showing the process of waveform transformation in a rectangular wave generation unit of Fig. 11 in the quantum computer according to the third embodiment.

### DETAILED DESCRIPTION OF THE PREFERRED EMBODIMENTS

Embodiments will be described in detail with reference to the diagrams. However, the present invention should not be construed as being limited to the description of the embodiments below. It is easily understood by those skilled in the art that the specific configuration can be changed without departing from the idea or the spirit of the present invention.

In the configurations of the embodiments described below, the same portions or portions having similar functions are denoted by the same reference numerals in different diagrams, and repeated descriptions thereof may be omitted.

When there are a plurality of elements having the same or similar functions, these may be described using the same reference numerals with different subscripts. However, when it is not necessary to distinguish between the plurality of elements, the subscripts may be omitted in the description.

In this specification and the like, expressions such as "first," "second," and "third" are used to identify components, and do not necessarily limit the number, order, or content thereof. In addition, numbers for identifying components are used for each context, and numbers used in one context do not always indicate the same configuration in other contexts. In addition, this does not prevent a component identified by a certain number from having the function of a component identified by another number.

The position, size, shape, range, and the like of each configuration shown in the diagrams and the like may not represent the actual position, size, shape, range, and the like in order to facilitate understanding of the invention. Therefore, the present invention is not necessarily limited to the position, size, shape, range, and the like disclosed in the diagrams and the like.

The publications, patents, and patent applications cited in this specification are a part of the description of this specification as they are.

In this specification, components expressed in the singular form are intended to include the plural form unless the context clearly indicates otherwise.

A silicon quantum computer is a computing device that performs calculations by using a two-level system of electrons formed within a silicon semiconductor substrate as the minimum unit of information (qubit) and controlling its state. In the silicon quantum computer, in order to implement fault-tolerant quantum computation by performing calculations among a plurality of qubits while satisfying control conditions and spatial constraints associated with the arrangement of gate electrodes, a technique (shuttling) for transporting electrons within the silicon semiconductor substrate is required. In particular, it is known that if electrons can be shuttled at a constant speed, quantum information loss associated with the shuttling of electrons can be prevented, which functions beneficially in large-scale quantum computation.

The present embodiment relates to a shuttling control method. The principles of the present embodiment and matters necessary for its explanation will be described below. First, the principle of shuttling electrons confined within a silicon semiconductor substrate will be described.

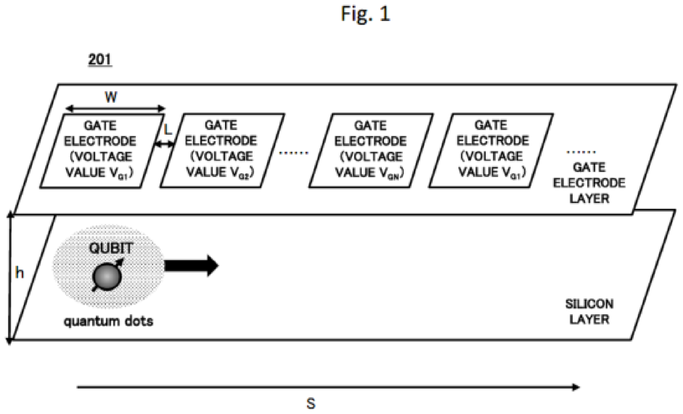

Fig. 1 is a schematic diagram of a silicon quantum device in which shuttling is implemented. In a gate electrode layer of a quantum device 201, gate electrodes each having an area of W × W are arranged at intervals L in a shuttling direction S. A voltage V_{Gj} (j = i mod N) is applied to the i-th gate electrode. When a voltage is applied to the gate electrodes, an amount of charge corresponding to the effective capacitance of each electrode is generated within the electrode surface. Due to this charge, an electrostatic potential is formed within the silicon layer immediately below (at height h) the gate electrode surface. This electrostatic potential confines the movement of electrons within the silicon layer. This confined region is called a quantum dot.

The shape of the quantum dot depends on the gate voltage applied to the gate electrode. That is, by applying an appropriate voltage waveform to the gate electrode, the quantum dot can be moved in the shuttling direction S through a change in the potential profile. This is the principle of shuttling. In addition, in the present embodiment, the voltage waveform refers to a waveform showing the time variation of a voltage value applied to the gate electrode. The structure of the quantum device is shown merely as an example, and any known quantum device having a plurality of gate electrodes can similarly perform electron shuttling. Therefore, the present embodiment can be applied.

In a silicon quantum computer, the quantum state (spin degree of freedom) of an electron confined in the quantum dot is treated as a unit of information (qubit), and computation is performed by controlling the state. The silicon quantum computer can perform arbitrary operations by controlling the gate voltage and an external field such as a magnetic field. For this reason, ideally, the silicon quantum computer functions as a universal quantum computer.

However, in practice, due to constraints in the device structure, such free operations cannot be performed. For example, a case can be considered in which the locations where external fields can be applied are limited and only qubits confined to specific quantum dots are allowed to perform operations. Such a problem is avoided by the shuttling technique described above. Even a qubit located at a position where an external field cannot be applied can perform operations by being moved to a position where an external field can be applied by shuttling. Shuttling is also important in quantum error correction. Specifically, in order to perform operations between a plurality of data qubits and a plurality of syndrome qubits, quantum error correction can be implemented by changing the positional relationship between the respective bits through shuttling.

However, not all types of shuttling function beneficially. Generally, the quantum information of a qubit is lost due to shuttling. This loss of quantum information leads to a deterioration in the overall accuracy of quantum computation. Therefore, in order to achieve high-accuracy quantum computation, shuttling control that preserves quantum information is required. According to conventional theoretical studies, it is known that if the size of a quantum dot in the in-plane direction of the silicon substrate is kept at approximately 25 nm or less and shuttling is performed at a constant speed of 10 m/s or less, the quantum information can be sufficiently preserved even during shuttling.

For example, in "Blueprint of a Scalable Spin Qubit Shuttle Device for Coherent Mid-Range Qubit Transfer in Disordered Si/SiGe/SiO2" Langrock, et al. PRX Quantum 4, 020305 (2023), shuttling that satisfies the above conditions is implemented by applying a voltage signal having a modulated sine wave as its waveform to the gate electrode. In this method, the size of the quantum dot is controlled by the amplitude of the sine wave, and the speed is controlled by the phase component. More specifically, the quantum dot is controlled to move at a constant speed by modulating the phase of the sine wave, and the speed is controlled by the frequency of the sine wave.

The shuttling technique has been implemented in small-scale silicon quantum devices, and its effectiveness has been verified. However, this method is not suitable for large-scale implementation for the reasons described below. First, a complex system is required to generate analog signals necessary for this method. For this reason, it is thought that when the device is scaled up, the physical volume occupied by the signal generator increases, resulting in a non-scalable device structure. Second, degradation of signal quality during transmission is unavoidable. Ensuring quality requires a complex system and a large amount of power consumption, which also hinders the scaling up of silicon quantum devices. From the above, it can be said that in order to construct a large-scale silicon quantum computer, a new shuttling control method including simple circuits is necessary.

The present embodiment provides a new method of implementing shuttling that solves the above-described problems. Hereinafter, detailed explanation will be given with reference to the diagrams and embodiments.

### [First embodiment]

The present embodiment is a quantum device that realizes stable shuttling by making the electron transport speed approach a constant speed. In the present embodiment, an overview of this device will be described.

In order to perform shuttling, it is effective to use a sine wave as a gate signal as described in "Blueprint of a Scalable Spin Qubit Shuttle Device for Coherent Mid-Range Qubit Transfer in Disordered Si/SiGe/SiO2" Langrock, et al. PRX Quantum 4, 020305 (2023). However, generating a sine wave using analog circuits is not suitable for implementation in a quantum computer. The reasons are as follows. (1) The system size increases due to signal generation. (2) The signal quality degrades during transmission.

In the present embodiment, the gate signal is basically generated by a digital circuit. Therefore, since the system size is reduced, it is possible to suppress the degradation of signal quality during transmission. In addition, by adopting a small-scale digital circuit configuration, power consumption can be reduced and heat generation can be suppressed, making the system suitable for arrangement in a low temperature section or ultra-low temperature section of a dilution refrigerator or the like. Since the system can also be arranged near the quantum device, it is possible to further suppress the degradation of signal quality during transmission.

It is possible to generate a waveform that approximates a sine wave using a digital circuit configuration. However, in order to faithfully reproduce a sine wave using a digital circuit, as the number of DC voltage sources or switches increases and the number of voltage levels increases, the effect of reducing the circuit size decreases. According to the inventors' study, stable shuttling can be achieved by applying a voltage, which is obtained by smoothing a rectangular waveform with a simple filter, to a plurality of gate electrodes arranged in the shuttling direction, and accordingly, the size of the digital circuit can also be further reduced. As the voltage waveform applied to the gate electrodes becomes closer to a modulated sine wave, it is possible to provide a quantum computer capable of performing stable shuttling even with a simple circuit. In addition, in the present embodiment, the rectangular wave can also be referred to as a pulse wave or a square wave, and refers to a substantially rectangular-shaped voltage waveform generated by a digital circuit. The waveform does not necessarily have to be a perfectly rectangular shape as long as it can be generated by a digital circuit.

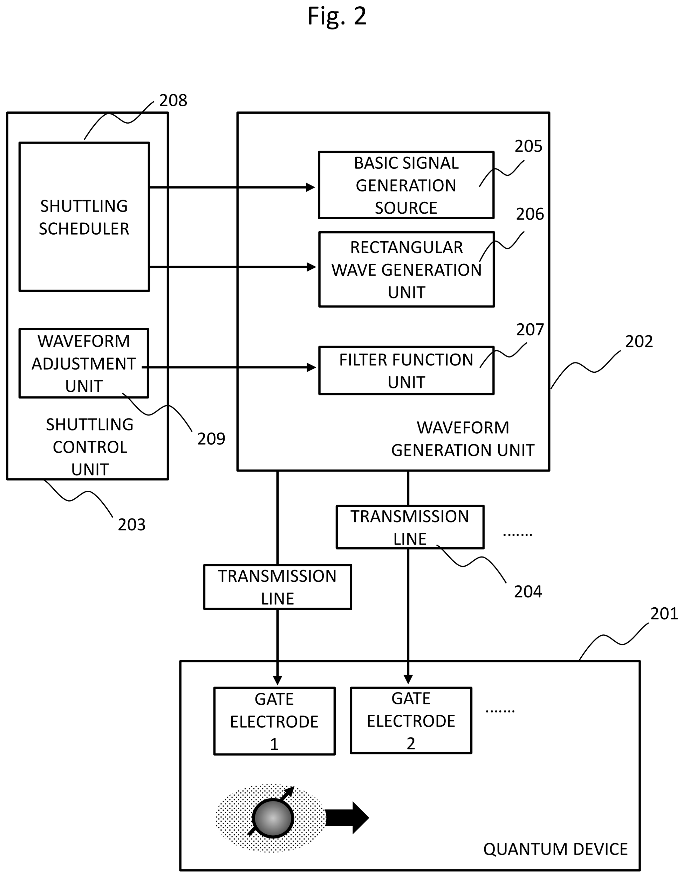

Fig. 2 shows the configuration of the quantum computer according to the present embodiment. This device includes a quantum device 201 having a plurality of gate electrodes, a waveform generation unit 202 that generates a voltage waveform to be applied to the gate electrodes, a shuttling control unit 203 that adjusts the timing of applying a voltage to the gate electrodes or waveform shape parameters, and a transmission line 204 for transmitting the generated voltage waveform to the quantum device.

The quantum device 201 is manufactured using semiconductor manufacturing technology, and operates according to the principle shown in Fig. 1. A specific configuration example is disclosed in, for example, WO2024/180760.

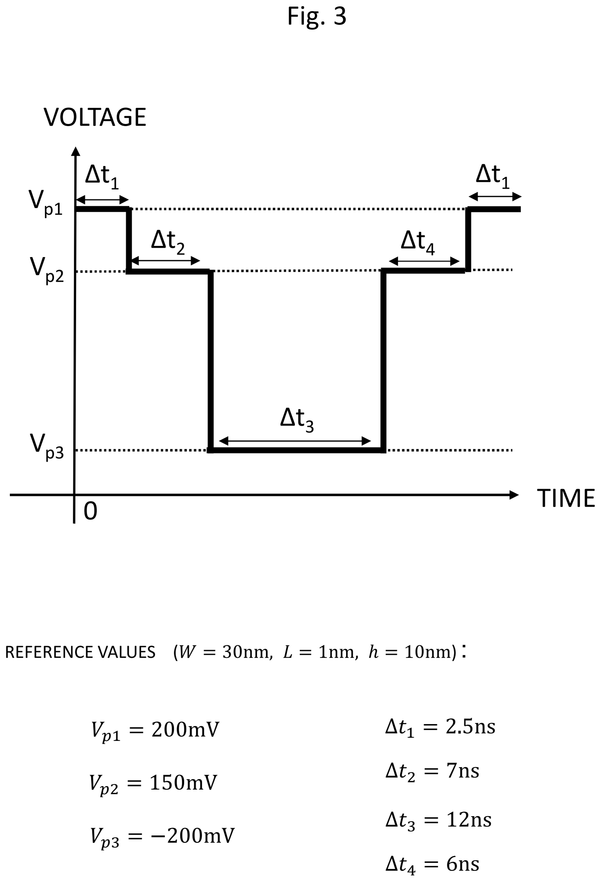

The waveform generation unit 202 has a basic signal generation source 205, a rectangular wave generation unit 206, and a filter function unit 207. In the waveform generation unit 202, a waveform having the same shape as that obtained by applying, for example, a low pass filter with a time constant τ = (3/5)Δt₁ to a rectangular wave having the shape shown in Fig. 3 as one period is generated.

Fig. 3 is a waveform diagram illustrating the rectangular wave generated by the rectangular wave generation unit 206. This waveform is characterized by three voltage values (Vₚ₁, Vₚ₂, Vₚ₃) and four time intervals (Δt₁, Δt₂, Δt₃ Δt₄). An output characterized by the filter properties (time constant τ) of the filter function unit 207 for this rectangular wave is output from the waveform generation unit 202. Appropriate values for each parameter will be described later.

The basic signal generation source 205 generates a basic waveform for forming the rectangular wave shown in Fig. 3. Specifically, a DC voltage source that generates three voltage values (Vₚ₁, Vₚ₂, Vₚ₃), a clock waveform generator, and the like can be mentioned (details are described in second and third embodiments). The shape of the basic waveform is controlled by a shuttling scheduler 208 of the shuttling control unit 203. It is assumed that the parameters characterizing the shape at that time are adjusted according to the characteristic values (device-specific characteristics and parasitic values generated in this device) obtained through device calibration.

In order to generate a waveform that accurately approximates a sine wave using a digital circuit configuration, a large number of voltage values are required. However, as will be described later, the present embodiment shows that shuttling applicable to quantum computers can be realized by using three voltage values (Vₚ₁, Vₚ₂, Vₚ₃).

The rectangular wave generation unit 206 receives a signal from the basic signal generation source 205 and generates a rectangular wave having the shape shown in Fig. 3 as one period. The characteristic parameters (Vₚ₁, Vₚ₂, Vₚ₃, Δt₁, Δt₂, Δt₃, Δt₄) of the rectangular wave at this time are controlled by the shuttling scheduler 208 of the shuttling control unit 203. It is assumed that the above parameter values are adjusted according to the characteristic values (device-specific characteristics and parasitic values generated in this device) obtained through device calibration.

The filter function unit 207 receives the rectangular wave generated by the rectangular wave generation unit 206 and modifies the waveform into a desired shape. The filter function unit 207 can be configured, for example, by a simple analog filter including a resistor and a capacitor connected in series. Specifically, the filter function unit 207 can be configured by a low pass filter having a time constant τ = (3/5)Δt₁. The filter function unit 207 outputs a waveform obtained by applying a low pass filter having a time constant τ = (3/5)Δt₁ to the rectangular wave generated by the rectangular wave generation unit 206.

By adopting a variable resistor and a variable capacitor, the parameters of the filter can be controlled by a waveform adjustment unit 209 of the shuttling control unit 203. It is assumed that the parameter values are adjusted according to the characteristic value obtained through device calibration. In device calibration, it is assumed that prior to the operation of the quantum computer or periodically, for example, the parasitic capacitance or the parasitic resistance of the quantum device 201 or the transmission line 204 is measured and the measured values are stored in a memory within the waveform adjustment unit. The waveform adjustment unit 209 adjusts the characteristics of the filter function unit 207 using the measured values stored in the memory, so that the voltage applied to the gate electrode becomes an appropriate value, which will be described later.

The above voltage waveform is applied to each gate electrode at a timing determined by the shuttling scheduler 208. At this time, the appropriate timing is set such that a voltage obtained by shifting the rectangular wave shown in Fig. 3 (waveform obtained by applying the filter thereto) by -Δt₁ - (j-1)Δt in the time direction is applied to the i-th gate electrode. Here, j is defined as j = i mod N.

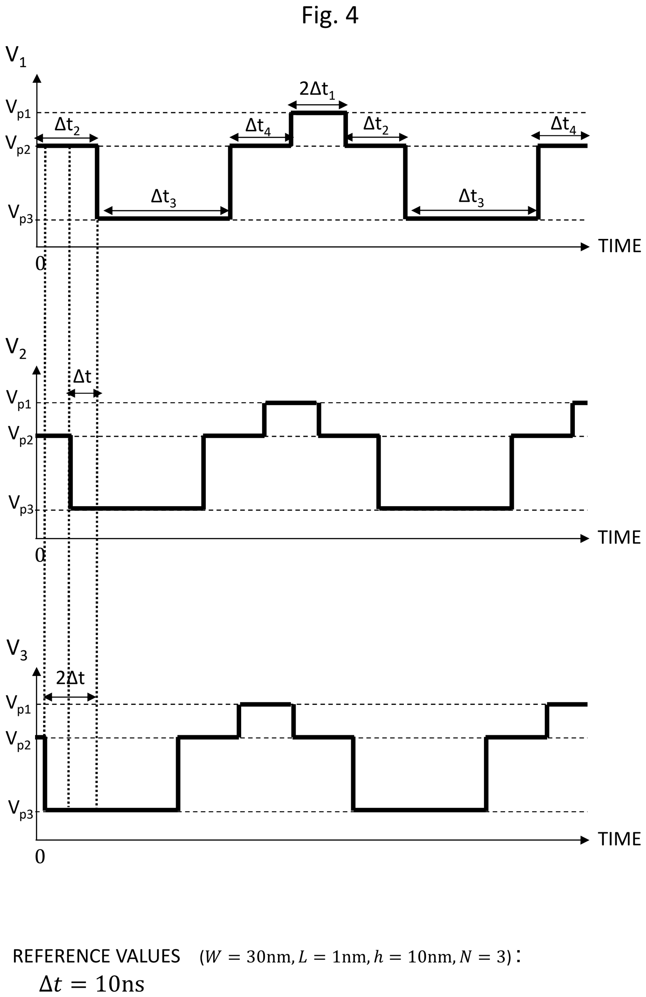

Fig. 4 shows specific examples of rectangular waves applied to the first, second, and third gate electrodes (j = 1, 2, and 3). Δt is the time shift of the voltage waveform applied to each gate electrode. It is also assumed that Δt is adjusted according to the characteristic values obtained through device calibration. The voltage waveforms are applied to the respective gate electrodes in the quantum device 201 through the transmission line 204. Then, the quantum dots change dynamically, and as a result, electrons in the quantum device 201 are shuttled in a direction in which the gate electrodes are aligned.

In the present embodiment, the generation of voltage waveforms with a constant period is assumed. However, by adjusting the parameters in the shuttling scheduler 208 and the waveform adjustment unit 209, more flexible shuttling control becomes possible. For example, the shuttling speed can be locally changed according to variations in characteristics, or the shuttling direction can be switched depending on the purpose of system operation. In addition, although the rectangular wave passing through the filter has been assumed to have two stages, this may be replaced with a higher-order rectangular wave having three or more stages. In this case, the waveform shape is adjusted to a shape close to that of the waveform in the conventional method.

Next, appropriate values of the waveform shape parameters (Vₚ₁, Vₚ₂, Vₚ₃, Δt₁, Δt₂, Δt₃, Δt₄, Δt) and time constants will be described. The appropriate values were derived from the simulation shown below. The parameters shown herein are values that depend on the device structure and are merely examples. It goes without saying that appropriate values will change if the device structure changes. Therefore, even if the device structure is changed, the present embodiment can be applied by setting the parameters according to the concept described below.

In this simulation, the device structure shown in Fig. 1 was assumed. The effective capacitance of each gate electrode was set to a common value C_{eff}, and a typical value for silicon quantum devices, 0.1 aF, was assumed as the value of C_{eff}. In addition, it was assumed that charges were uniformly distributed over the surface of each gate electrode, and the total charge amount was set to an amount obtained by multiplying C_{eff} by each gate voltage value and the gate electrode area. Based on the above, the electrostatic potential (quantum dot) formed in the silicon layer was calculated using the following (Equation 1).$V \left(\vec{r}\right) = {\sum }_{i = 1}^{{N}_{tot}} \int {d}^{3} \vec{R} \frac{1}{4 π {ϵ}_{Si}} \frac{{ρ}_{i} \left(\vec{R}\right)}{\left|\vec{r}-\vec{R}\right|}$

(Equation 1) represents the potential formed at the coordinate r in silicon. On the right-hand side, Nₜₒₜ denotes the total number of gate electrodes, εₛᵢ denotes the effective dielectric constant in silicon, and ρᵢ denotes the charge distribution within the surface of the i-th gate electrode. The charge distribution ρᵢ is set to 0 outside the gate electrode and C_{eff}V_{Gi}/S inside the gate electrode. Here, S denotes the area of the gate electrode (= W × W), and V_{Gi} denotes a voltage value applied to the i-th gate electrode. The gate electrodes are arranged in a periodic array of N gate electrodes as shown in Fig. 1, and the subscript j of V_{Gj} is defined as j = i mod N. When a voltage waveform (time variation of a voltage value) is given, the potential (shape of the quantum dot) is calculated according to (Equation 1), and accordingly, the electron orbit (position where the potential is minimum) at each time is evaluated.

In this analysis, as an example, a device structure with N = 3, Nₜₒₜ = 9, W = 30 nm, l = 1 nm, and h = 10 nm was assumed.

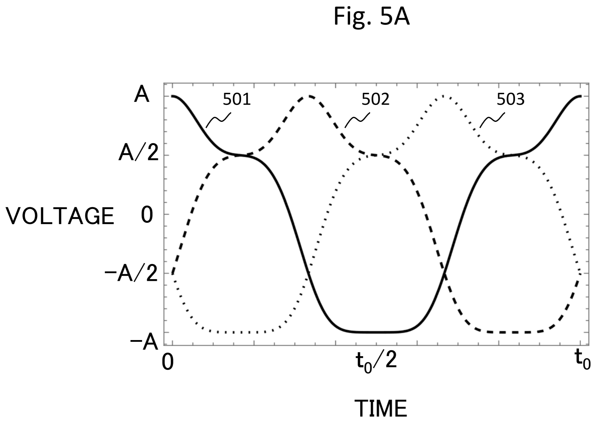

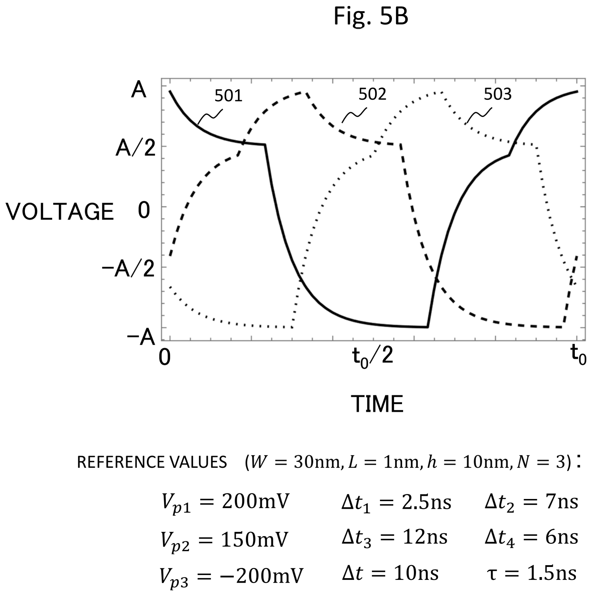

Fig. 5A shows a gate voltage waveform obtained by a method using a sine wave generated by an analog circuit as a comparative example. Fig. 5B shows a gate voltage waveform in the method of the present embodiment.

The solid line 501, dashed line 502, and dotted line 503 in Figs. 5A and 5B indicate voltage waveforms applied to the first, fourth, and seventh gate electrodes, the second, fifth, and eighth gate electrodes, and the third, sixth, and ninth gate electrodes. The gate electrodes are assumed to be arranged at equal intervals in one direction. In the present embodiment, the quantum dots formed below the gate electrodes can be stably moved in the direction in which the gate electrodes are aligned. When the gate electrodes are formed in a two-dimensional array and movement in a plurality of directions is desired, movements in one direction may be combined.

The waveform in the comparative example of Fig. 5A is given in the form of a function Acos(2πt/t₀ - 2π(i-1)/N + 0.1sin(2πNt/t₀)) for the i- th gate electrode, and the waveform in the present embodiment of Fig. 5B is configured according to the parameters Vₚ₁ = A, Vₚ₂ = (3/4)A, Vₚ₃ = -A, Δt₁ = t₀/12, Δt₂ = (7/30)t₀, Δt₃ = (2/5)t₀, Δt₄ = t₀/5, Δt = t₀/N, τ = t₀/20 to match the shape of the waveform in the comparative example.

In the ideal state of the present embodiment, by applying the voltages shown in Fig. 5B to a plurality of gate electrodes, a plurality of quantum dots below the gates move in parallel in the same direction at a constant speed, thereby performing shuttling.

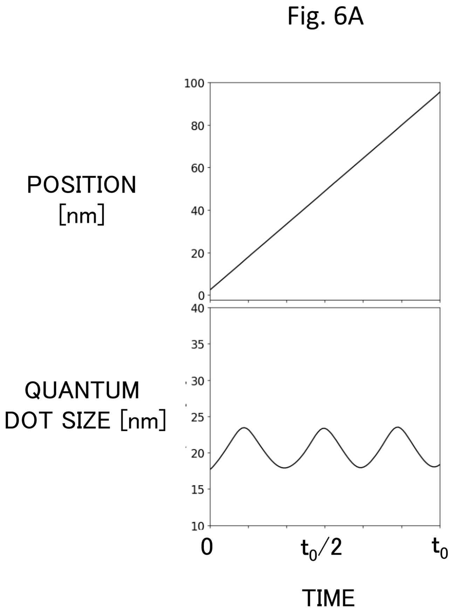

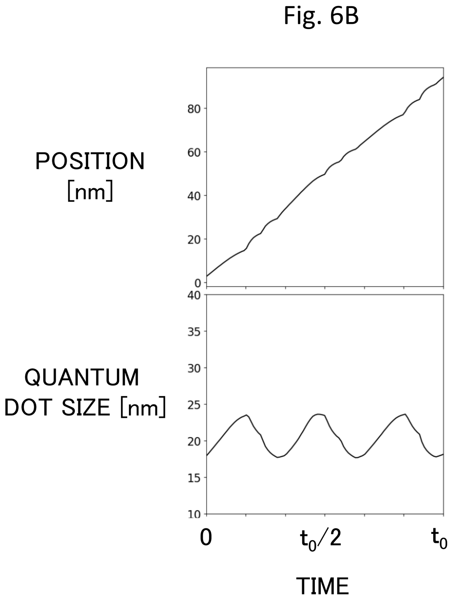

Fig. 6A shows the simulation results of the shuttling behavior according to the comparative example of Fig. 5A. Fig. 6B shows the simulation results of the shuttling behavior according to the embodiment of Fig. 5B.

In both methods, the voltage waveform parameters were set to A = 200 mV and t₀ = 30 ns. The upper part shows the time variation of the electron position (the minimum point of the potential), and the lower part shows the time variation of the quantum dot size. The size of the quantum dot was defined as a value obtained by dividing the second derivative of the potential at the minimum point by the effective electron mass (= 0.19 × 0.5 MeV). The simulation results showed that, in both methods, the quantum dot size was suppressed to 25 nm or less and shuttling at a constant speed of v = N(W + L)/t₀ = (93/30) m/s < 10 m/s was achieved.

This indicates that the present embodiment, which uses a rectangular wave having three voltage values, can achieve performance equivalent to that of the comparative example, which uses an analog circuit. In addition, four or more voltage values can be used, in which case the results become even closer to those of the comparative example. However, if the number of voltage values is increased excessively, the system scale becomes comparable to that of an analog circuit.

That is, it was found that the present embodiment could implement shuttling equivalent to that of the comparative example by generating the waveform using the rectangular waveform parameters and the time constant described above. In addition, the shuttling speed can be adjusted by adjusting the values such as N and t₀.

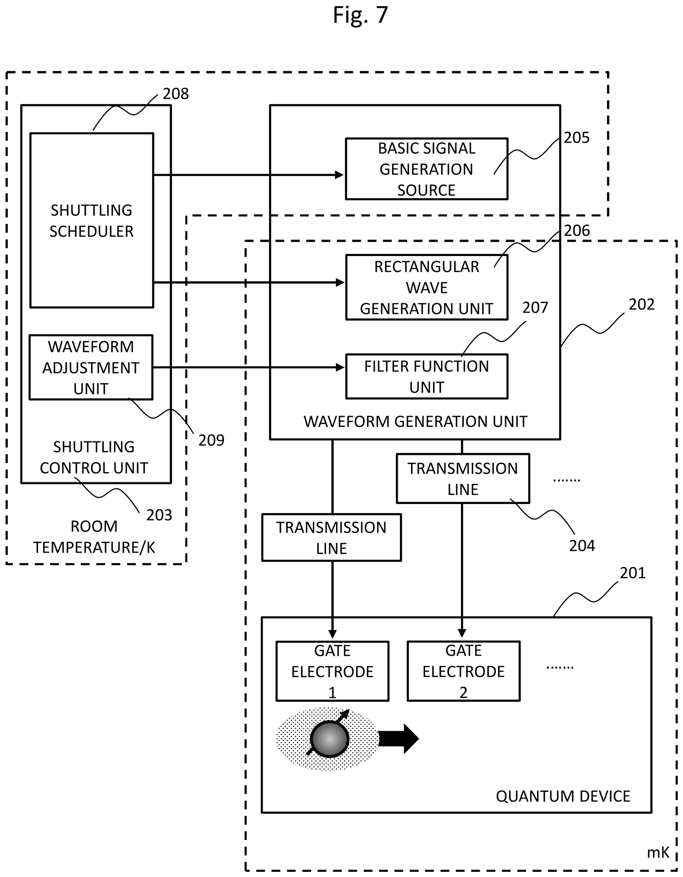

Fig. 7 is a block diagram showing an example of a specific configuration of the quantum computer shown in Fig. 2. The quantum device 201 shown in Figs. 1 and 2 is arranged in the ultra-low temperature section (mK section) of a dilution refrigerator. The ultra-low temperature section is maintained at, for example, 4 K to 0.01 K. Among the other components 202 to 209 shown in Fig. 2, the rectangular wave generation unit 206, the filter function unit 207, and the transmission line 204 are arranged in the ultra-low temperature section near the quantum device. On the other hand, it is assumed that the basic signal generation source 205 and the shuttling control unit 203 (208, 209) are arranged in a room temperature section (for example, 1 to 30°C) outside the dilution refrigerator or in a low temperature section (K) inside the dilution refrigerator. The low temperature section is assumed to have a temperature between that of the ultra-low temperature section and that of the room-temperature section. A specific example of a device having this structure will be described in a fourth embodiment below. By arranging the rectangular wave generation unit 206, the filter function unit 207, and the transmission line 204 in the ultra-low temperature section in this manner, the length of the transmission line can be shortened. As a result, since variations in parasitic resistance and parasitic capacitance of each element can be suppressed, there is an advantage that it becomes easy to supply a desired voltage level at a desired timing.

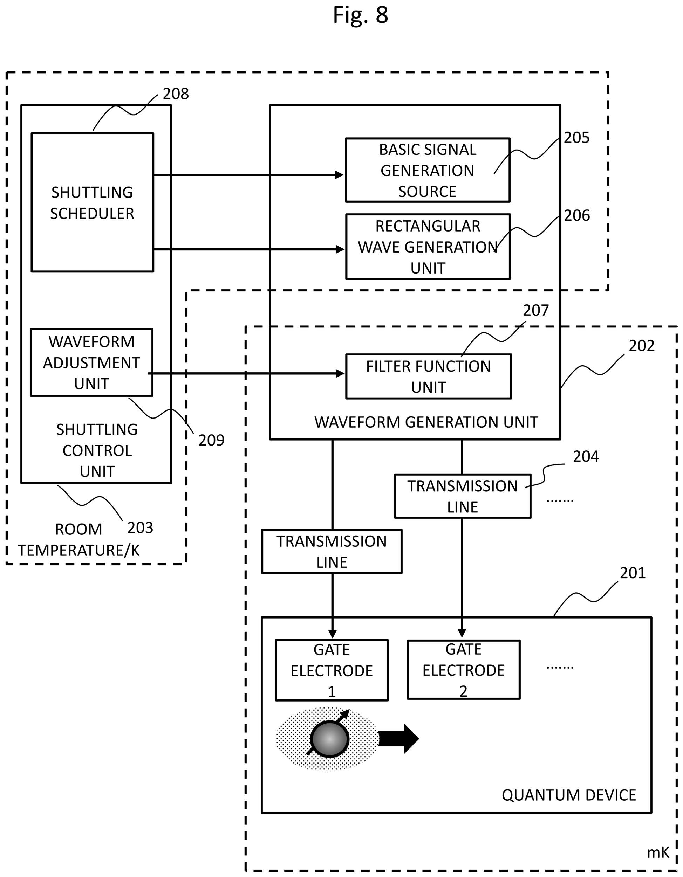

Fig. 8 is a block diagram showing another example of the specific configuration of the quantum computer shown in Fig. 2. In the quantum computer shown in Fig. 7, the rectangular wave generation unit 206 is arranged in an ultra-low temperature section. That is, the rectangular wave generation unit 206 is arranged near the quantum device. Although this represents the optimal arrangement, the arrangement may be changed in consideration of controllability, physical space, power consumption, and the like. For this reason, in the present embodiment, a structure is considered in which the rectangular wave generation unit 206 is arranged in a low temperature section or a room temperature section. The quantum device 201, the transmission line 204, and the filter function unit 207 are arranged in a cryogenic region. The other functional components (202, 203, 205, 206, 208, 209) are arranged in a room temperature section or a low temperature section. A specific example of a device having this structure will be described later. By arranging the rectangular wave generation unit 206 in the low temperature section or the room temperature section in this manner, there is an advantage that more physical space can be secured in the ultra-low temperature section of the dilution refrigerator.

In the first embodiment, the shuttling scheduler 208 is provided. Therefore, since the voltage waveform to be applied to each gate electrode can be applied at a predetermined timing, it is possible to avoid unnecessary calculations within the entire system. In addition, by adjusting the timing of voltage application using the shuttling scheduler, the application timing can be flexibly controlled according to the characteristics of the quantum device.

### [Second embodiment]

In the present embodiment, specific circuit structures of the waveform generation unit 202 and the shuttling control unit 203 in the first embodiment will be described.

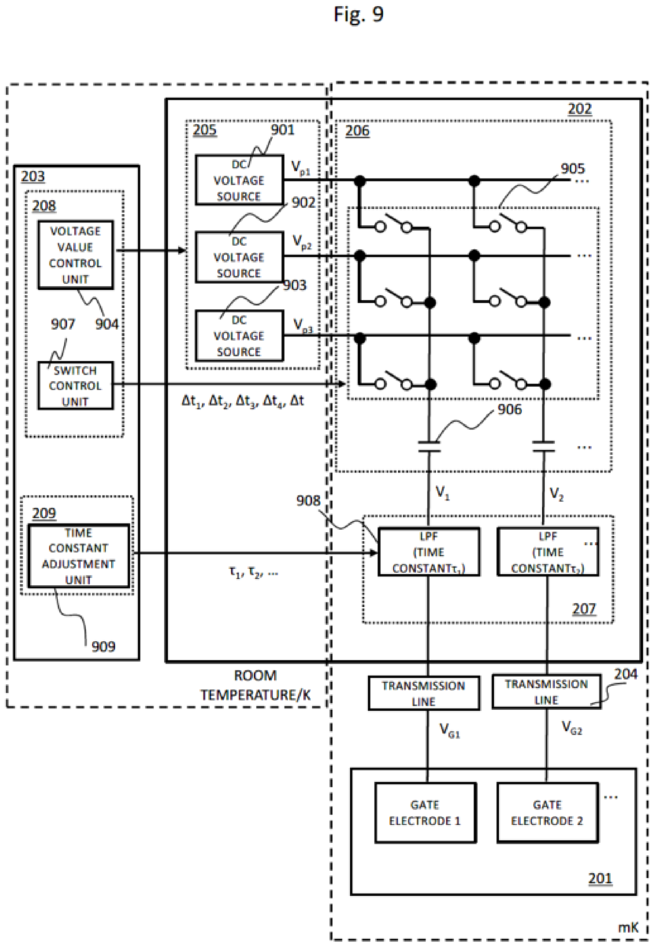

Fig. 9 is a block diagram showing another example of the configuration of a quantum computer. Here, a specific example of an apparatus having the functions shown in Fig. 7 will be described.

This device has three types of DC voltage sources 901 to 903 as functions corresponding to the basic signal generation source 205. The voltage sources 901 to 903 generate three voltage values (Vₚ₁, Vₚ₂, Vₚ₃), respectively. It is assumed that this voltage value is set to be the appropriate value described in the first embodiment and each value can be adjusted by a voltage value control unit 904 provided in the shuttling scheduler 208 of the shuttling control unit 203. In this case, the parameter values are adjusted by taking into consideration the device-specific characteristics and parasitic values occurring in the device, which are obtained through calibration.

Each of the DC voltage sources 901 to 903 is connected to a circuit connected to each gate electrode through a switch 905, and the voltage values are added together at a capacitance portion 906. It is assumed that the capacitance portion 906 can be individually adjusted for each gate electrode and variations in characteristics for each gate can be reduced by this adjustment. As a result, rectangular waves V₁, V₂, ... having the shapes shown in Figs. 3 and 4, are generated. The four time intervals (Δt₁, Δt₂, Δt₃, Δt₄), which are characteristic parameters of the rectangular wave in Fig. 3, and the time shift Δt of the voltage waveform applied to each gate electrode shown in Fig. 4 are adjusted by the switching timing of the switch 905, and each value is set to satisfy the appropriate value described in the first embodiment. The switching timing of the switch is controlled by a switch control unit 907 provided in the shuttling scheduler 208 of the shuttling control unit 203. In this case, the parameter values are adjusted by taking into consideration the device-specific characteristics and the parasitic values occurring in this device.

Each of the rectangular waves V₁, V₂, ... is transmitted to the filter function unit 207, where a low pass filter 908 is applied to each rectangular wave. The filter function unit 207 includes a resistor and a capacitor connected in series, and the time constant (τ₁, τ₂, ...) of the low pass filter 908 applied to each rectangular wave is adjusted by adjusting the values of the resistor and the capacitor. It is assumed that these resistors and capacitors are independent of the parasitic resistance and parasitic capacitance. That is, the resistor and the capacitor forming the low pass filter 908 are different from the parasitic resistance and the parasitic capacitance. It is assumed that the values of these time constants can be adjusted by a time constant adjustment unit 909, which is provided in the waveform generation unit of the shuttling control unit. In this case, the parameter values are adjusted by taking into consideration the device-specific characteristics and the parasitic values occurring in this device.

The waveforms V_{G1}, V_{G2}, ... generated by the time constant adjustment unit are applied to the respective gate electrodes through respective transmission lines and as a result, electron shuttling is performed in the quantum device 201.

The quantum device 201 is arranged in the ultra-low temperature section (mK section) of the dilution refrigerator. In the waveform generation unit 202, the switch 905 and the low pass filter 908 are arranged in the ultra-low temperature section. On the other hand, the DC voltage sources 901 to 903 and the shuttling control unit 203 are arranged in the low temperature section or room temperature section of the dilution refrigerator. This device corresponds to the specific example shown in Fig. 7.

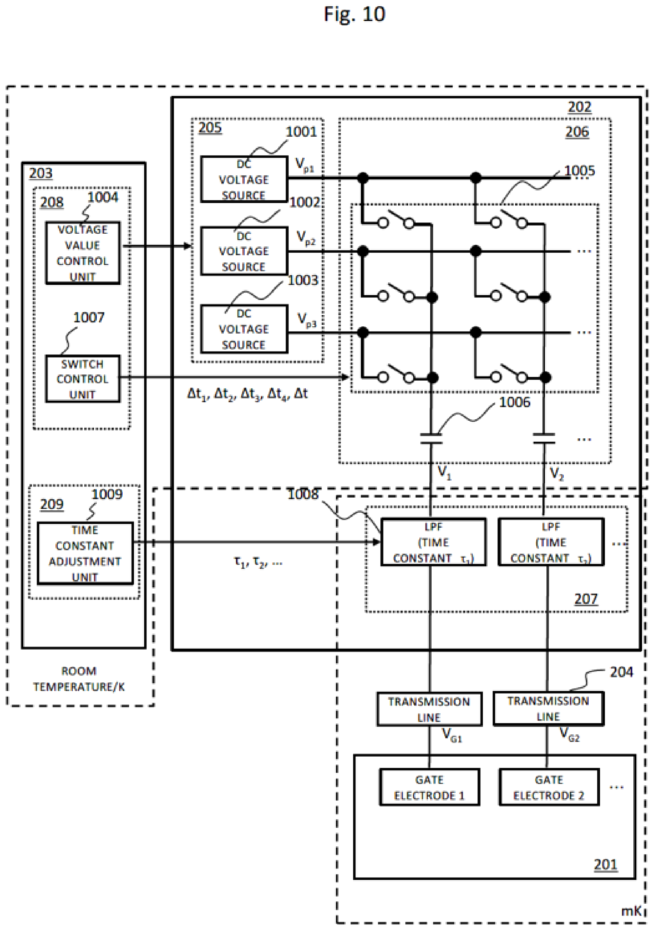

Fig. 10 is a block diagram showing an example of the configuration of a quantum computer. Here, a specific example of a device having the function shown in Fig. 8 will be described. In the device shown in Fig. 9, the switch 905 is arranged in the ultra-low temperature section. That is, the device is located near the quantum device. This arrangement is advantageous in terms of maintaining signal quality. However, this may be a disadvantage when considering the difficulty of control and power consumption. For this reason, in the present embodiment, a structure is considered in which the switch 905 is arranged in a low temperature section or a room temperature section. The structure is shown in Fig. 10.

Components 1001 to 1009 in Fig. 10 are assumed to have functions equivalent to those of 901 to 9090 described above, respectively. The difference from Fig. 9 is that the switch 1005 is arranged in a room temperature section or a low temperature portion. This device corresponds to the specific example shown in Fig. 8. As described above, the quantum computer according to the second embodiment includes: a quantum dot device 201 having a plurality of gate electrodes; at least three DC voltage sources 1001 to 1003 each having a different voltage value that generate voltages to be applied to the plurality of gate electrodes; a plurality of switches 1005 for switching the connections between the at least three DC voltage sources 1001 to 1003 and the plurality of gate electrodes; a switch control unit 1007 that controls the plurality of switches; and a low pass filter 1008 arranged between the plurality of switches 1005 and the plurality of gate electrodes. This provides the effect that the size of the quantum dot can be adjusted by stably controlling the voltage level of the DC voltage source and that electrons can be shuttled at arbitrary timing through switch control.

In addition, the quantum computer in the second embodiment includes a time constant adjustment unit 909 that smooths a rectangular waveform. This has the effect of enabling shuttling to be achieved with higher precision, since even if the characteristics of the quantum device change, the time constant of the filter action section can be adjusted to follow this. Therefore, even when the characteristics of the quantum device change as the quantum computer system operates, the time constant of the filter function unit can be adjusted in response to such changes. This provides the effect of enabling shuttling with higher accuracy.

### [Third embodiment]

In the present embodiment, a modification example of the specific circuit structure of the waveform generation unit 202 and the shuttling control unit 203 in the first embodiment will be described.

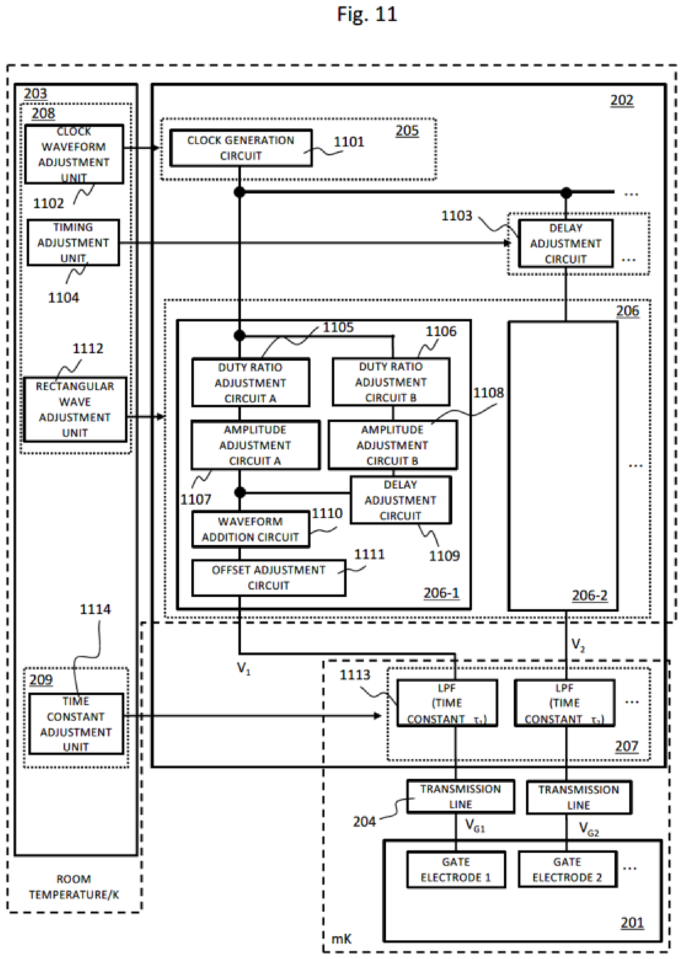

Fig. 11 is a block diagram showing an example of a specific configuration of a quantum computer. Here, another specific example of a circuit having the function of Fig. 8 will be described.

This device includes a clock generation circuit 1101 as a function corresponding to that of the basic signal generation source 205. In the clock generation circuit 1101, a binary continuous pulse with a duty ratio of 50% is generated. Hereinafter, the waveform generated herein will be referred to as a clock waveform. It is assumed that the shape parameters of the clock waveform can be adjusted by a clock waveform adjustment unit 1102 of the shuttling control unit 203. In this case, the parameter values are adjusted by taking into consideration the device-specific characteristics and the parasitic values occurring in this device.

The clock waveform is transmitted either directly or through a delay circuit 1103 to a rectangular wave generation unit 206 connected to each gate electrode. The delay circuit 1103 is a part that performs the time shift Δt shown in Fig. 4. This time shift value is adjusted by a timing control unit 1104 of the shuttling control unit 203. In this case, the parameter values are adjusted by taking into consideration the device-specific characteristics and the parasitic values occurring in this device.

Each rectangular wave generation unit 206 includes two types of duty ratio adjustment circuits 1105 and 1106, two types of amplitude adjustment circuits 1107 and 1108, a delay adjustment circuit 1109, a waveform addition circuit 1110, and an offset adjustment circuit 1111. Each circuit performs a stepwise transformation into the rectangular wave having the shape shown in Fig. 3.

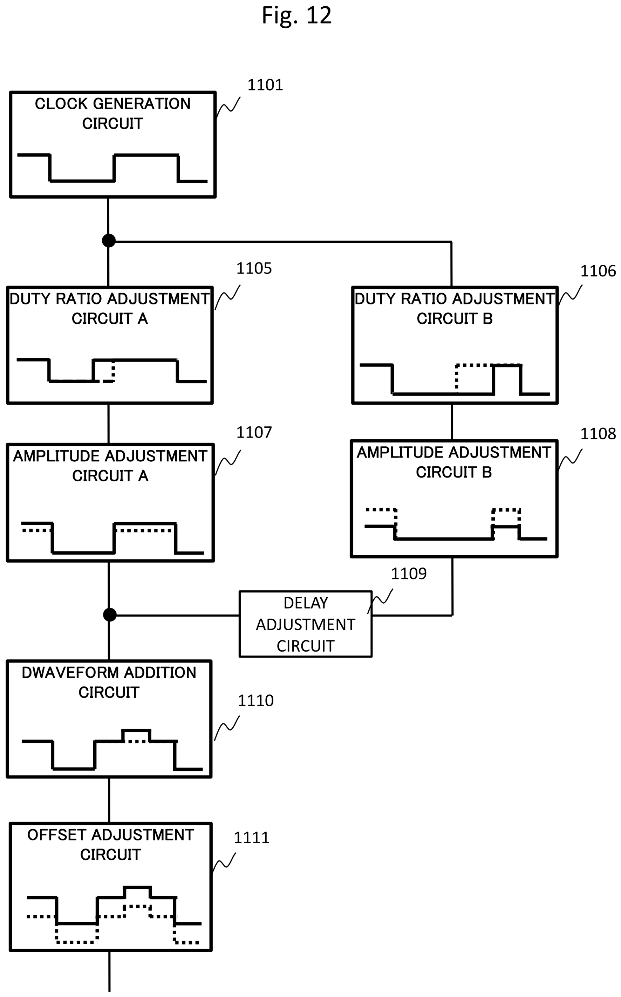

Fig. 12 shows a waveform transformation process herein. In Fig. 12, each dotted line indicates a waveform before transformation, and each solid line indicates a waveform after transformation. Hereinafter, the transformation executed in each stage will be described. In addition, the parameters associated with the waveform modification are adjusted by a rectangular wave adjustment unit 1112 of the shuttling control unit. In this case, the parameter values are adjusted by taking into consideration the device-specific characteristics and the parasitic values occurring in this device.

First, the duty ratio adjustment circuit adjusts the duty ratio of the clock waveform. The duty ratio adjustment circuit 1105 shown in Figs. 11 and 12 increases the duty ratio, while the duty ratio adjustment circuit 1106 decreases the duty ratio.

The subsequent amplitude adjustment circuit changes the amplitude scale of the entire waveform. The amplitude adjustment circuit 1107 shown in Figs. 11 and 12 increases the amplitude of the voltage waveform output from the duty ratio adjustment circuit 1105, and the amplitude adjustment circuit 1108 decreases the amplitude of the voltage waveform output from the duty ratio adjustment circuit 1106.

The waveforms output from the amplitude adjustment circuits 1107 and 1108 are added together in the waveform addition circuit 1110. In this case, the addition timing of is controlled by the delay adjustment circuit 1109 after the amplitude adjustment circuit 1108. The waveform output from the waveform addition circuit 1110 is added with a constant voltage value by the offset adjustment circuit 1111, and as a result, the desired rectangular waves V₁, V₂, ... shown in Figs. 3 and 4 are generated.

Each of the rectangular waves V₁, V₂, ... is transmitted to the filter function unit 207, where a low pass filter 1113 is applied to each rectangular wave. The filter function unit 207 has a resistor and a capacitor connected in series, and the time constant (τ₁, τ₂, ...) of the low pass filter applied to each rectangular wave is adjusted by adjusting the values of the resistor and the capacitor. It is assumed that the values of these time constants can be adjusted by a time constant adjustment unit 1114, which is provided in the waveform generation unit of the shuttling control unit. In this case, the parameter values are adjusted by taking into consideration the device-specific characteristics and the parasitic values occurring in this device.

The waveforms V_{G1}, V_{G2}, ... generated by the time constant adjustment unit are applied to the respective gate electrodes through respective transmission lines and as a result, electron shuttling is performed in the quantum device 201.

The quantum device 201 is arranged in the ultra-low temperature section of the dilution refrigerator. In the waveform generation unit 202, the low pass filter 1113 is arranged in the ultra-low temperature section. The other functional components (1101 to 1112, 1114) are assumed to be arranged in a low temperature section or room temperature section of the dilution refrigerator. Since the generation of rectangular waves in this device requires analog adjustment, it is preferable to place the rectangular wave generation unit 206 in a room temperature section or a low temperature section from the viewpoint of the difficulty of control. This device corresponds to the specific example shown in Fig. 9.

As described above, the quantum computer according to the third embodiment includes: a quantum dot device 201 having a plurality of gate electrodes; a generation circuit 205 that generates square waves to be applied to the plurality of gate electrodes; a line for branching the generated square waves; first adjustment circuits 1105 and 1107 that adjust the duty ratio and amplitude of one of the branched square waves; second adjustment circuits 1106 and 1108 that adjust the duty ratio and amplitude of the other of the branched square waves; a delay circuit 1109 that delays the outputs of the second adjustment circuits 1106 and 1108; a waveform addition circuit 1110 that combines the outputs of the first adjustment circuits 1105 and 1107 and the output of the delay circuit 1109; and a low pass filter 1113 arranged between the waveform addition circuit 1110 and the gate electrodes. Therefore, the voltage waveforms can be finely adjusted in stages using a series of circuits in the rectangular wave generation unit 206, and the timing of voltage application is arbitrarily adjusted by the delay adjustment circuit, thereby achieving the effect of enabling electron shuttling at arbitrary timing.

According to the embodiments described above, the voltage shape applied to the gate electrode can be made to approximate a sine wave using a simple circuit without using an analog signal, so that the movement of electrons approaches uniform linear motion, making it possible to provide a quantum computer capable of performing stable shuttling.

According to the embodiments described above, since an efficient quantum computer can be realized, it is possible to contribute to the realization of a sustainable society by reducing energy consumption, decreasing carbon emissions, and preventing global warming.
201: quantum device
202: waveform generation unit
203: shuttling control unit
204: transmission line
205: basic signal generation source
206: rectangular wave generation unit
207: filter function unit
208: shuttling scheduler
209: waveform adjustment unit
901 to 903, 1001 to 1003: DC voltage source
904, 1004: voltage value control unit
905, 1005: switch
906, 1006: capacitance portion
907, 1007: switch control unit
908, 1008, 1113: low pass filter
909, 1009, 1114: time constant adjustment unit
1101: clock generation circuit
1102: clock waveform adjustment unit
1103: delay adjustment circuit
1104: timing adjustment unit
1105 to 1106: duty ratio adjustment circuit
1107 to 1109: amplitude adjustment circuit
1110: waveform addition circuit
1111: offset adjustment circuit
1112: rectangular wave adjustment unit

## Claims

1. A quantum computer, comprising:
a quantum dot device having a plurality of gate electrodes;
a basic signal generation source configured to generate a voltage to be applied to each of the plurality of gate electrodes;
a rectangular wave generation unit configured to shape the voltage to be applied to each of the plurality of gate electrodes to have a rectangular waveform; and
a filter function unit arranged between the rectangular wave generation unit and the plurality of gate electrodes to smooth the rectangular waveform.

2. The quantum computer according to claim 1,
wherein the basic signal generation source includes at least three DC voltage sources each having a different voltage value that generate voltages to be applied to the plurality of gate electrodes,
the rectangular wave generation unit includes a plurality of switches for switching connections between the at least three DC voltage sources and the plurality of gate electrodes,
a switch control unit configured to control the plurality of switches is further provided, and
the filter function unit includes a low pass filter.

3. The quantum computer according to claim 1,
wherein the basic signal generation source includes a clock generation circuit configured to generate a square wave to be applied to each of the plurality of gate electrodes,
a plurality of the rectangular wave generation units are provided,
each of the rectangular wave generation units includes a first adjustment circuit for adjusting a duty ratio and amplitude of one of the square waves branched from the clock generation circuit, a second adjustment circuit for adjusting a duty ratio and amplitude of the other of the square waves branched from the clock generation circuit, a delay circuit for delaying an output of the second adjustment circuit, and a waveform addition circuit for combining outputs of the first adjustment circuit and the delay circuit, and
the filter function unit includes a low pass filter.

4. The quantum computer according to claim 1,
wherein an output of the rectangular wave generation unit is supplied to the different gate electrodes after passing through the filter function unit.

5. The quantum computer according to claim 1,
wherein the rectangular waveform is determined by three or more voltage values.

6. The quantum computer according to claim 5,
wherein the rectangular waveform is determined by four or more time intervals.

7. The quantum computer according to claim 6,
wherein the basic signal generation source includes three or more DC voltage sources for generating the three or more voltage values,
the rectangular wave generation unit includes a switch for combining the three or more voltage values,
a shuttling control unit is further provided, and
the shuttling control unit includes a shuttling scheduler for controlling the switch based on the four or more time intervals.

8. The quantum computer according to claim 1,
wherein the filter function unit is a low pass filter including a resistor and a capacitor connected in series,
a shuttling control unit is further provided, and
the shuttling control unit includes a time constant adjustment unit for controlling characteristics of the low pass filter.

9. The quantum computer according to claim 8,
wherein the time constant adjustment unit controls the characteristics of the low pass filter based on values of parasitic capacitance and parasitic resistance between the rectangular wave generation unit and the plurality of gate electrodes.

10. The quantum computer according to claim 3,
wherein the rectangular wave generation unit includes an offset adjustment circuit for offsetting an output of the waveform addition circuit.

11. The quantum computer according to claim 1,
wherein electrons are shuttled in a direction in which the plurality of gate electrodes are aligned.

12. The quantum computer according to claim 1,
wherein the rectangular wave generation unit, the filter function unit, and the quantum dot device are arranged in an ultra-low temperature region, and the basic signal generation source is arranged in a low temperature region or a room temperature region.

13. The quantum computer according to claim 1,
wherein the filter function unit and the quantum dot device are arranged in an ultra-low temperature region, and the rectangular wave generation unit and the basic signal generation source are arranged in a low temperature region or a room temperature region.

14. A method for controlling a quantum computer, comprising:
a step of generating a voltage to be applied to each of a plurality of gate electrodes of a quantum dot device;
a step of shaping the voltage to be applied to each of the plurality of gate electrodes to have a rectangular waveform;
a step of smoothing the rectangular waveform; and
a step of shuttling electrons by applying a voltage with the smoothed rectangular waveform to the plurality of gate electrodes.

15. A quantum computer, comprising:
a quantum dot device having a plurality of gate electrodes,
wherein electron shuttling is performed by adjusting a voltage to be applied to each of the plurality of gate electrodes based on a voltage waveform generated by digital control.

16. A quantum computer, comprising:
a quantum dot device having a plurality of gate electrodes;
a rectangular wave generation unit configured to generate a voltage having a rectangular waveform; and
a low pass filter arranged between the rectangular wave generation unit and the plurality of gate electrodes,
wherein the voltage is applied to the plurality of gate electrodes through the low pass filter.
